# EUROPÄISCHE PATENTSCHRIFT

(11) **EP 3 078 598 B1**
(45) Veröffentlichungstag und Bekanntmachung des Hinweises auf die Patenterteilung: **22.05.2019**
(21) Anmeldenummer: 15450017.7
(22) Anmeldetag: 09.04.2015
(51) Int. Cl.: B64G 1/22, B64G 1/58, B64G 1/40, B64G 1/50

(54) **PNEUMATISCH ENTFALTBARE THERMALISOLATION FÜR KRYOGENE RAKETENTANKS**
PNEUMATICALLY DEPLOYABLE THERMAL INSULATION FOR CRYOGENIC MISSILE TANKS
ISOLATION THERMIQUE DÉPLOYABLE PNEUMATIQUEMENT POUR RÉSERVOIRS DE FUSÉE CRYOGÉNIQUES

(43) Veröffentlichungstag der Anmeldung: 12.10.2016
(73) Patentinhaber: RUAG Space GmbH, 1120 Wien (AT)
(72) Erfinder: Moser, Martin, 1070 Wien (AT); Hoidn, Walter, 3492 Etsdorf am Kamp (AT)
(74) Vertreter: Keschmann, Marc

(56) Entgegenhaltungen:
- WO-A2-00/57685
- US-A1- 2010 187 365

## Beschreibung

Die Erfindung betrifft eine entfaltbare Vorrichtung zur thermischen Isolation von kryogenen Tanks von Raumflugkörpern umfassend wenigstens eine Isolationsmatte, bevorzugt eine Mehrzahl von in Umfangsrichtung des Tanks verteilt angeordneten Isolationsmatten, und der bzw. den Isolationsmatte(n) jeweils zugeordnete Entfaltungsmittel zum Entrollen der Isolationsmatte(n) vom aufgerollten Zustand in den ausgefahrenen Zustand.

Raketen werden aufgrund der höheren Energiedichte mit flüssigen, also tiefkalten Brennstoffen, wie z.B. Wasserstoff oder Sauerstoff betankt. Um die Abdampfrate des flüssigen Treibstoffes zu minimieren, werden diese Tanks isoliert, an der Innenseite meist mit Dämmsystemen aus Schaumstoff und an der Außenseite mit einer aufgesprühten Schaumstoffisolation. Die externe Isolation ist weiß gehalten, um den Wärmeeintrag durch Sonnenenergie zu reduzieren. Die Reibungshitze beim Raketenstart führt jedoch dazu, dass sich die externe Schaumstoffisolation dunkel verfärbt, wodurch der Wärmeeintrag in den Tank im Orbit erhöht wird.

Isolationsmaterial, das derzeit verwendet wird, um Raketentanks für kryogenen Treibstoff gegen Abdampfen der Flüssigkeit zu schützen, umfasst typischer Weise Schäume aus Polyvinylchlorid, Polyurethan, oder Polyetherimid. Diese Schäume werden in Dicken von 20-200mm entweder geklebt oder direkt auf die Tankoberfläche gesprayt (EP 1878663 A1, EP 2354621 A1). Um der durch die Verfärbung und Ablation des Isolationsmaterials verursachten Degradation der Isolationswirkung entgegenzuwirken, können Paneele zum Einsatz gelangen, die das Isolationsmaterial, insbesondere den Schaum, unter dem Paneel beim Start schützen und nach der ersten Flugphase abgesprengt werden. Solche Paneele unterliegen aber selbst komplexen mechanischen Startbeanspruchungen und reduzieren die Zugänglichkeit zur Raketenoberstufe.

Durch die notwendige Anbindung an die Struktur entstehen Wärmebrücken, die das Verbesserungspotential und Wirkung der dahinterliegenden Viellagenisolation oder Schäume gering halten.

Weiters sind verschiedene Ausbildungen von Sonnenschilden bekannt geworden, die vorgesehen sind, um Raketentanks für kryogenen Treibstoff im Orbit gegen Strahlung abzuschirmen. Solche Sonnenschilde sind meist ausklappbar oder entfaltbar ausgebildet. Sie befinden sich während der Startphase in eingeklapptem oder gefaltetem Zustand und werden erst im Orbit entfaltet. Beim Gegenstand der US 8,196,869 B2 umfasst das Sonnenschild eine Mehrzahl von entlang des Umfangs des Tanks verteilt angeordneten Isolationsmatten und den Isolationsmatten jeweils zugeordnete Antriebe zum Entrollen der Isolationsmatten vom aufgerollten Zustand in den ausgefahrenen Zustand. Die Matten sind jeweils auf eine Rolle aufgerollt und werden mit Hilfe eines pneumatisch betätigten Mechanismus von dieser abgezogen. Die Isolationsmatten werden so ausgefahren, dass sie ein kegelförmiges Schild ergeben. Der Abrollmechanismus erfordert somit eine ortsfeste Rolle samt geeigneter Halterung sowie einen davon gesonderten, externen Antrieb, woraus sich ein nicht unerheblicher Platzbedarf sowie eine aufwändige und fehleranfällige Konstruktion mit hoher Masse ergibt.

Die Erfindung zielt darauf ab, eine Vorrichtung der eingangs genannten Art dahingehend zu verbessern, dass folgenden Anforderungen zumindest teilweise Rechnung getragen wird:
- Hoher thermischer Isolationsgrad im Vakuum, um eine geringe Abdampfrate des kryogenen Treibstoffes und somit eine längere Betriebsdauer der Oberstufe zu ermöglichen
- Geringe Masse
- Kompakte Bauweise
- Versatilität:
   Das System soll nur an solchen Missionen eingesetzt werden, bei denen eine lange Betriebsdauer und/oder Mehrfachzündung der Oberstufe notwendig ist.

Dazu
∘ sollen die permanenten baulichen und mechanischen Einträge an der Oberstufe wie z.B. Verbindungsstellen, Anschlüsse und dgl. gering gehalten werden,
∘ sollen die permanenten Einträge in die Steuerung und Software der Rakete gering gehalten werden,
∘ soll die Installation des Systems einfach und ohne Umbauten an der Oberstufe erfolgen können,
∘ soll das System auch spät in der Integrationssequenz noch eingebaut werden können.

Weiters soll das System leicht adaptierbar an unterschiedlichen Raketentypen einsetzbar sein.
- Die Zugänglichkeit zu den (Sub)Systemen der Rakete soll nicht eingeschränkt sein
- Ein ausreichender Widerstand gegen mechanische und thermische Lasten, vor allem in der Startphase der Rakete muss gegeben sein
- Widerstand gegen Umwelteinflüsse während
   ∘ der Startvorbereitung (Regen, Wind, Luftfeuchte etc.)
   ∘ im Orbit (Strahlung, Temperaturzyklen etc.) muss gegeben sein
- Im Orbit soll Kräften resultierend aus der stabilisierenden Rotation der Oberstufe und der Beschleunigungen durch Zündung des Triebwerks widerstanden werden.
- das System soll der Reinheitsanforderung "visible clean" nach ECSS-Q-ST-70-01C und einem erlaubten Ausgasverhalten nach ECSS-Q-70-02 entsprechen, um eine Querkontamination der Nutzlast zu vermeiden.

Zur Lösung dieser Aufgabe besteht die Erfindung gemäß Anspruch 1 darin, dass die Entfaltungsmittel wenigstens ein sich in Entrollrichtung erstreckendes, mit der Isolationsmatte verbundenes oder in diese integriertes, durch gesteuerte Formänderung vom aufgerollten Zustand in den ausgefahrenen Zustand entrollbares Formänderungselement umfassen. Die Entfaltung der Isolationsmatten erfolgt somit mit Hilfe von Formänderungselementen, welche jeweils mit der zugehörigen Isolationsmatte aufgerollt vorrätig gehalten werden und durch entsprechende gesteuerte Formänderung ein Entrollen der Isolationsmatten bewirken. Die gesteuerte Formänderung erfolgt hierbei bevorzugt so, dass das wenigstens eine Formänderungselement von der aufgerollten Form in die gestreckte Form gezwungen wird. Das Formänderungselement nimmt dabei die mit ihm verbundene Isolationsmatte mit, sodass sich eine entsprechende Formänderung, nämlich ein Entrollen, der Isolationsmatte ergibt. Auf Grund der erfindungsgemäßen Ausbildung erfordern die Entfaltungsmittel keinen gesonderten Einbauraum, sodass sich eine besonders platzsparende Konstruktion ergibt. Ein weiterer Vorteil des Systems liegt im niedrigen Komplexitätsgrad und der sich dadurch ergebenden Variabilität in der Anwendung.

Die Formänderung des Formänderungselements kann auf verschiedene Art und Weise unter Ausnutzung der für Weltraumanwendungen geeigneten Aktorprinzipien erfolgen, z.B. mit Hilfe eines integrierten Feder- oder Formgedächtniselements oder eines Bimetall-Aktors. Bevorzugt ist jedoch vorgesehen, dass das Formänderungselement wenigstens einen mit Druckmedium beaufschlagbaren Hohlraum umfasst. Das Formänderungselement ist somit pneumatisch betätigbar, wobei die Formänderung dadurch erfolgt, dass sich durch das Aufblasen des Hohlraums eine vordefinierte Form des Formänderungselements ergibt.

Besonders bevorzugt ist in diesem Zusammenhang vorgesehen, dass das Formänderungselement als sich in Entrollrichtung im Wesentlichen über die gesamte Länge der Isolationsmatte erstreckender, aufblasbarer Holm ausgebildet ist, der mit der Isolationsmatte verbunden oder in diese integriert ist. Ein solcher Holm kann im aufgeblasenen Zustand beispielsweise kreisförmigen Querschnitt haben, wobei ein geringer Durchmesser ausreicht, um die für das Entrollen der Isolationsmatte erforderliche Kraft aufzubringen. Der aufblasbare Holm erstreckt sich hierbei bevorzugt über die ausrollbare Länge der Isolationsmatte. Mit Vorteil ist eine Isolationsmatte mit wenigstens zwei parallelen, sich in Entrollrichtung erstreckenden Holmen ausgestattet, wobei es günstig ist, die zwei Holmen an den zwei Seitenrändern der Isolationsmatte anzuordnen. Ein dritter Holm oder mehrere weitere Holme kann bzw. können ggf. in der Mitte zwischen den beiden randseitigen Holmen angeordnet sein.

Ein selbsttätiges Entrollen allein auf Grund der Wirkung des Formänderungselements gelingt insbesondere dann, wenn, wie es einer bevorzugten Ausbildung der Erfindung entspricht, das im aufgerollten Zustand radial äußere freie Ende der Isolationsmatte am Raumflugkörper, insbesondere an einem Nutzlastadapter des Raumflugkörpers, befestigt ist. Die Isolationsmatte ist somit anders als in Fällen, in denen sie auf eine zentrale Welle aufgerollt ist, nicht am radial inneren freien Ende, sondern am radial äußeren freien Ende befestigt. Dadurch gelingt eine direkte Befestigung, sodass auf gesonderte Bauelemente, wie z.B. eine drehbar gelagerte Welle samt Lagerung, verzichtet werden kann. Am Raumflugkörper sind daher keine ständigen Installationen erforderlich, weil die aufgerollte Installationsmatte den Entrollmechanismus integriert. Es ist lediglich ein Anschluss des für die gesteuerte Formänderung des Formänderungselements benötigten Antriebs, wie z.B. die Zufuhr eines Aufblasmediums, erforderlich.

Um das Entrollen der isolationsmatte möglichst ruckfrei ablaufen zu lassen, sieht eine bevorzugte Ausbildung vor, dass die Isolationsmatte und/oder das Formänderungselement mit einer dem Entrollen entgegenwirkenden Bremsvorrichtung ausgestattet ist bzw. sind. Die Bremsvorrichtung umfasst hierbei mit Vorteil eine lösbare Verbindung, insbesondere eine Haken-Schlaufen-Verbindung, zwischen übereinander liegenden Lagen der aufgerollten Isoliermatte und/oder des Formänderungselements.

Die erfindungsgemäße Verwendung eines mit der Isolationsmatte aufgerollten Formänderungselements erlaubt in einfacher Weise eine Anpassung der nach dem Entrollen einzunehmenden Form. So kann den Isolationsmatten bei einer entsprechenden Auslegung der Formänderungselemente im ausgefahrenen Zustand eine solche Endform gegeben werden, dass die Isolationsmatten möglichst der Kontur des abzuschirmenden Tanks folgen. Eine bevorzugte Ausbildung sieht in diesem Zusammenhang vor, dass das Formänderungselement im ausgefahrenen Zustand eine Abwinkelung ausbildet. Im Fall der Ausbildung des Formänderungselements als pneumatisch aufblasbarer Holm oder dgl. wird die genannte Abwinkelung in einfacher Weise dadurch erzielt, dass der Holm in der Art vorgeformt ist, dass sich im aufgeblasenen Zustand die erwünschte Form ergibt.

Die Abwinkelung ist hierbei bevorzugt so angeordnet, dass die Isolationsmatte sich ausgehend von der Befestigung am Nutzlastadapter des Raumflugkörpers in einem ersten Abschnitt entlang der stirnseitigen Oberfläche des Tanks erstreckt, im Bereich der umlaufenden Kante umgelenkt ist und in einem daran anschließenden zweiten Bereich im wesentlichen parallel zur insbesondere zylindrischen Wand des Tanks verläuft.

Die Isolationsmatten sind bevorzugt so angeordnet, dass sie gemeinsam einen vieleckigen zylindrischen Mantel um den Tank ausbilden. Die Anzahl der Ecken des Vielecks entspricht dabei der Anzahl der Isolationsmatten.

Um eine lückenlose Abschirmung des Tanks zu erreichen, ist bevorzugt vorgesehen dass benachbarte Isolationsmatten einander überlappen.

Die erfindungsgemäße Vorrichtung wird bevorzugt an der Oberstufe einer Rakete verwendet, um den kryogenen Tank der Oberstufe gegen Sonnenstrahlung abzuschirmen.

Zusammenfassend erlaubt es die erfindungsgemäße Vorrichtung nicht nur dem erhöhten Wärmeeintrag entgegenzuwirken, sondern sogar den Wärmeeintrag in den Tank und damit die Abdampfrate des kryogenen Treibstoffs soweit zu reduzieren, dass das Triebwerk einer Oberstufe öfter und über einen längeren Zeitraum wieder gestartet werden kann. Dadurch wird es möglich, Satelliten in unterschiedlichen Orbits auszusetzen und die Flexibilität der Raketen zu erhöhen.

Das Isolationsystem kann auf dem Nutzlastadapter montiert werden und befindet sich beim Start geschützt unter der Nutzlastverkleidung. Es wird nach Absprengung der Nutzlastverkleidung im Orbit entfaltet. Die Entfaltung erfolgt bevorzugt rein pneumatisch durch Abrollen und gebremst durch Klettbänder. Das System ist unabhängig von der Oberflächengeometrie der Raketenoberstufe und kann nach Bedarf zusätzlich zur Raketen-Basisisolation verwendet werden.

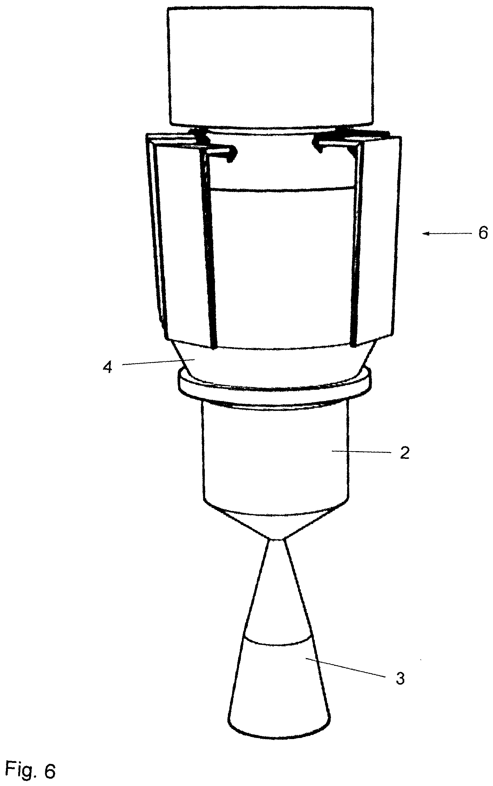

Die Erfindung wird nachfolgend anhand eines in der Zeichnung schematisch dargestellten Ausführungsbeispiels näher erläutert. In dieser zeigen Fig. 1 die Oberstufe einer Rakete mit der erfindungsgemäßen Isolationsvorrichtung in aufgerolltem Zustand, Fig. 2 - Fig. 5 die einzelnen Stufen des Entfaltungsvorganges in einer Detailansicht, Fig. 6 die Oberstufe mit entfalteter Isolationsvorrichtung, Fig. 7 eine schematische Darstellung einer Isolationsmatte, Fig. 8 eine Veranschaulichung des Entrollvorgangs und Fig. 9 und 10 zwei Stufen der Entfaltung im Bereich einer Abwinkelung in einer Detailansicht eines Formänderungselements der Isolationsmatte.

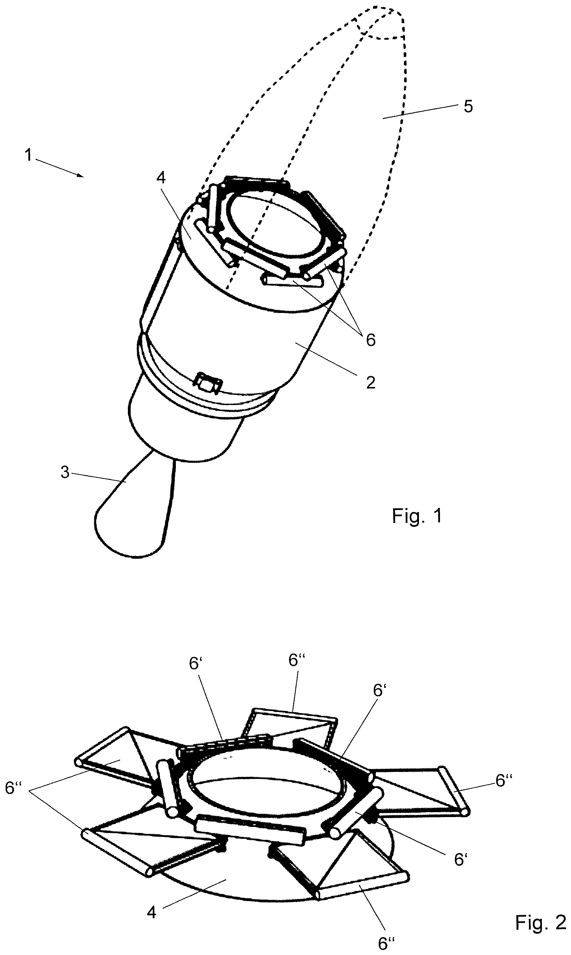

In Fig. 1 ist die Oberstufe 1 einer Rakete dargestellt, welche einen kryogenen Tank 2 für die Versorgung eines Raketenantriebs 3 und einen Nutzlastadapter 4 aufweist. Die nicht dargestellte Nutzlast ist unter der strichliert angedeuteten Nutzlastverkleidung 5 angeordnet. Die erfindungsgemäße Isolationsvorrichtung ist auf dem Nutzlastadapter 4 montiert und umfasst mehrere Segmente 6. Die Segmente 6 umschreiben einen konzentrisch zur Raketenachse angeordneten Kreis und sind entlang dieses Kreises, d.h. in Umfangsrichtung verteilt angeordnet. Die Segmente 6 sind dabei in zwei Gruppen unterteilt, wobei die Segmente 6' der ersten Gruppe und die Segmente 6" der zweiten Gruppe einander in Umfangsrichtung abwechseln. Die Segmente 6' der ersten Gruppe sind relativ zu den Segmenten 6" der zweiten Gruppe versetzt angeordnet. Insbesondere umschreiben die Segmente 6' der ersten Gruppe einen Kreis mit kleinerem Durchmesser als die Segmente 6" der zweiten Gruppe. Dadurch können benachbarte Segmente 6', 6" einander überlappend angeordnet werden. Alle Segmente 6 können baugleich gestaltet und untereinander austauschbar sein.

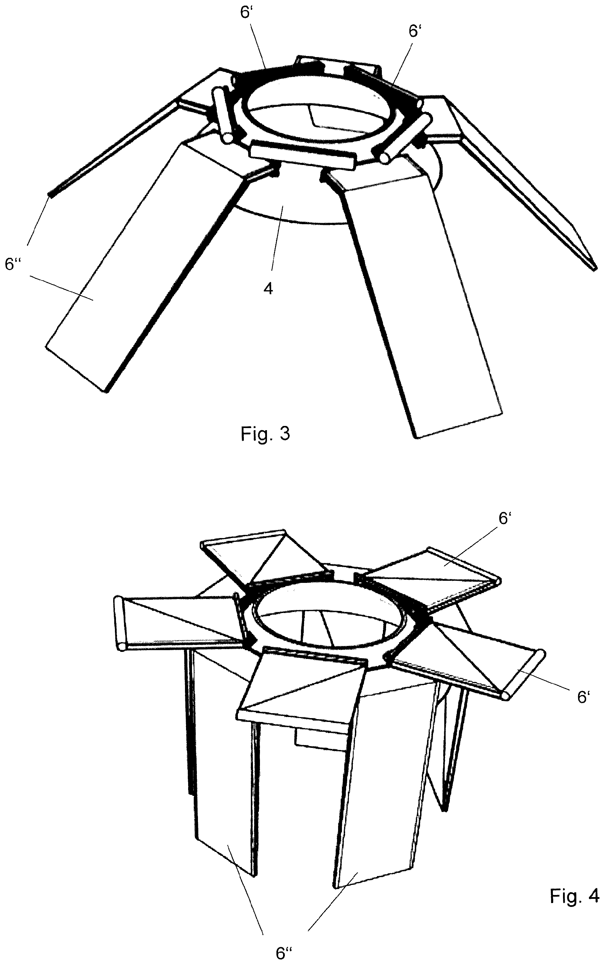

Während der Startvorbereitung, Betankung und der ersten Flugphase der Rakete 1 sind die Segmente 6 eingerollt und vollständig unter der Nutzlastverkleidung 5 verstaut und somit vor Umwelteinflüssen und Startlasten geschützt (Fig. 1). Nach Absprengung der Nutzlastverkleidung 5 wird das System sequenziell über den kryogenen Tank 2 der Raketenoberstufe 1 entfaltet. Zuerst werden die weiter innen angeordneten Segmente 6' der ersten Gruppe horizontal abgerollt (Fig. 2), dann kontrolliert geknickt (Fig. 3) und in die endgültige Form über den kryogenen Tank 2 gebracht (Fig. 4). Die weiter außen angeordneten Segmente 6" der zweiten Gruppe sind während dieses Vorganges noch verstaut.

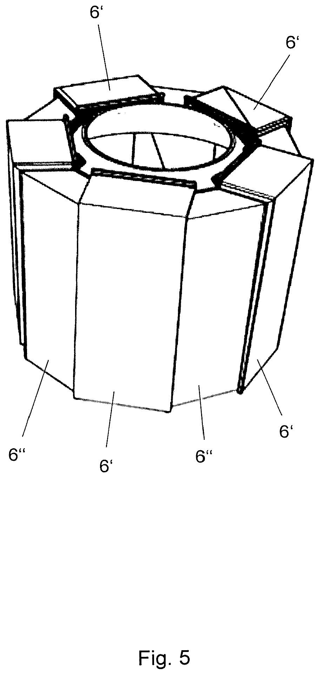

Im Anschluss erfolgt die Entfaltung der Segmente 6" der zweiten Gruppe nach den Prozessschritten horizontales Ausfahren (Fig. 4), knicken (Fig. 5), und Abdecken des Tanks 2 (Fig. 5). Die Segmente 6" der zweiten Gruppe sind so angeordnet, dass der Randbereich der Segmente 6' der ersten Gruppe überdeckt wird. Damit wird eine direkte Sonneneinstrahlung bei Rotation der Oberstufe vermieden.

Der Entfaltungsprozess erfolgt pneumatisch. Jedes Segment besteht aus einem Isolationssystem aus mit Druckmedium beaufschlagbaren bzw. befüllbaren Hohlkörpern, insbesondere Holmen 7, die mit Isolationsmatten 8 verkleidet und verbunden sind. Die Holme 7 sind in der Endgestalt vorgeformt und aus erprobten Raumfahrtmaterialien, wie beispielsweise Polyethylenterephthalat (PET, Mylar®), Polyimid (PI, Kapton®, Upilex®) oder Polyetheretherketon (PEEK) gefertigt und können verklebt und zusätzlich mit Geweben verstärkt oder ummantelt sein. In Abhängigkeit von der Konfiguration und Geometrie der Oberstufe sind die Holme 7 so geformt, dass in der Endgestalt eine Knickung α von wenigen Graden bis zu mehr als 100° erreicht wird.

Zwei oder mehr entfaltbare Holme 7 können je Segment 6 mit einem gasförmigen Medium, insbesondere Stickstoff oder Helium bedruckt bzw. befüllt werden. Die Holme 7 bilden hierbei Formänderungselemente, die zuerst (Fig. 1) aufgerollt sind und durch das Befüllen mit gasförmigem Medium eine in Entrollrichtung fortschreitende Kraft in Richtung der Einnahme ihrer vorgegebenen Form ausüben. Die genannte Kraft führt zu einem fortschreitenden Entrollen der Isolationsmatten 8. Die Isolationsmatten 8 können aus einer Ein- oder Viellagen-Isolation oder anderen Materialien, wie z.B. Schäumen oder Geweben bestehen.

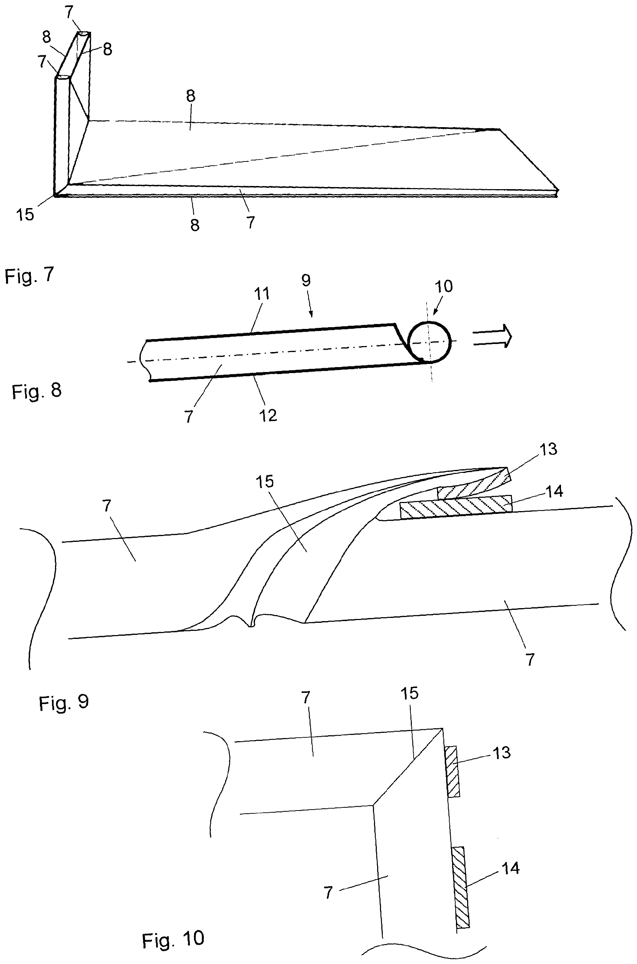

Der Entrollvorgang erfolgt frei von mechanischen Bauteilen und rein pneumatisch. Der Entrollvorgang ist schematisch in Fig. 8 dargestellt. In einem ersten Abschnitt 9 der Isolationsmatte 8 ist diese bereits entrollt worden und die Holme 7 sind in diesem Abschnitt mit Medium gefüllt und aufgeblasen worden. In einem zweiten Abschnitt 10 befindet sich die Isolationsmatte 8 noch in aufgerolltem Zustand.

Das Entrollen wird hierbei durch Klettbänder gebremst, wodurch eine ruckfreie Bewegung erzielt werden kann. Ein als Hakenband ausgebildetes Klettband 11 ist auf der einen Seite des Holms 7 und ein als Schlaufenband ausgebildetes Klettband 12 ist auf der anderen Seite des Holms 7 angebracht, sodass das Hakenband und das Schlaufenband im aufgerolltem Zustand des Holms 7 miteinander zusammenwirken. Bei Aufbringung des Druckes in den Holmen 7 erfolgt eine kontrollierte Abrollbewegung an den Klettbändern durch Öffnen der Haken-Schlaufen Verbindung. Die Abrollgeschwindigkeit wird über den Druck in den Holmen 7 und die Geometrie (Breite, Type) der Klettbänder eingestellt.

Wie in Fig. 9 und 10 dargestellt, wird der Vorgang des Abknickens durch weitere Klettbänder 13 und 14 kontrolliert, die an den Holmen 7 angebracht sind. Hierfür wird jeder Holm 7 im Bereich der Abwinkelung 15 im nicht bedruckten Zustand so gefaltet, dass ein gerader, horizontal ausgerichteter Hohlkörper entsteht (Fig. 9) . Die Faltung wird mittels einer Haken- und Schlaufenband-Verbindung geschlossen. Bei Aufbringung des Druckes wird die Klettbandverbindung gelöst und der Holm 7 strebt die finale L-Form durch eine Schwingbewegung an (Fig. 10) . Es können handelsübliche und in der Raumfahrt erprobte Klettbänder eingesetzt werden, z.B. Velcro®, Scotchbrite® oder dgl.

Die erfindungsgemäße Vorrichtung zeichnet sich durch die folgenden Vorteile aus. Durch die Befestigung am Nutzlastadapter ist das System unabhängig von der Geometrie der Oberstufe. Die Oberstufe kann dadurch für herkömmliche Missionen nach dem Stand der Technik ausgelegt werden. Im Bedarfsfall wird das entfaltbare Isolationssystem zusätzlich durch Wahl des dafür vorgesehenen Nutzlastadapters angebracht. Eine mechanische Anbindung direkt an der Oberstufe ist nicht notwendig. Dadurch
- entsteht eine zusätzliche Isolationswirkung im Vergleich zu einer herkömmlichen Isolation,
- ist weiter ein uneingeschränkter Zugang zur Oberstufe und deren Subsystemen gegeben,
- entstehen keine zusätzlichen Wärmebrücken,
- muss die Oberstufe nicht bei jedem Start zusätzliche Masse in Form von z.B. Verbindungsstellen, Anschlüsse und dgl. heben,
- kann das System an jeder Oberstufe mit gleichem Nutzlastadapter verwendet werden,
- kann das System ohne nachträgliche Modifikation der Oberstufe an bestehende Raketentypen angepasst werden.

Auf Grund der Montage unter der Nutzlastverkleidung ist das Isolationssystem während der Bodenoperationen und der ersten Startphase vor Startlasten und Umwelteinflüssen geschützt. Auf zusätzliche, das System schützende Strukturkomponenten kann verzichtet werden. Im Gegensatz zum Stand der Technik ist die entfaltbare Isolation voll auf einen Einsatz im Vakuum des Weltraums optimiert. Durch den Einsatz von Viellagenisolation wird ein hoher Isolationsgrad bei geringem Masseneintrag erzielt.

Das entfaltbare System besteht aus Materialien und Komponenten, die bereits für Anwendungen im Weltraum erprobt sind. Druck-Steuer- und Regelsysteme für Helium oder Stickstoff entsprechen dem Stand der Technik und befinden sich vielfach z.B. für Kaltgasantriebe oder zum Bedrucken von Satelliten-Treibstofftanks im Einsatz.

Die Entfaltung der Isolation kann rein pneumatisch ohne zusätzliche mechanische Bauteile erfolgen. Das resultiert in einer
- geringen Anzahl kritischer Bauelemente und Subsysteme,
- geringen Komplexität,
- leichten Adaptierbarkeit,
- geringen Masse des Gesamtsystems

In weiterer Folge kann das System auch als permanente Komponente der Raketenoberstufe verwendet werden. Dies würde es erlauben, die herkömmliche Isolation der Tanks auf den Einsatz am Boden zu optimieren und im Weltraum allein auf die entfaltbare Isolation zu vertrauen. Dadurch kann
- die Abdampfrate des Treibstoffs am Boden reduziert werden,
- die Dicke des isolierenden Schaums, der permanent auf der Oberstufe bleibt, verringert, oder
- der Schaum vollständig entfernt und damit zusätzliche Masse eingespart werden.

Eine Abwandlung des Systems kann für die variable Abdeckung von Radiatorflächen an Satelliten verwendet werden. Werden große Radiatorflächen benötigt, also eine hohe Abstrahlwirkung, befindet sich das System im verstauten und aufgerollten Zustand. Sobald die Umgebungsbedingungen geringere Abstrahlwirkung erfordern, wird die Isolation pneumatisch entfaltet und der Radiator partiell abgedeckt. Mit Hilfe eines zusätzlichen Federmechanismus kann eine Rückbewegung und damit ein 2-Wege System erzielt werden.

## Patentansprüche

1. Entfaltbare Vorrichtung zur thermischen Isolation von kryogenen Tanks von Raumflugkörpern umfassend wenigstens eine Isolationsmatte, bevorzugt eine Mehrzahl von in Umfangsrichtung des Tanks verteilt angeordneten Isolationsmatten, und der bzw. den Isolationsmatte(n) jeweils zugeordnete Entfaltungsmittel zum Entrollen der Isolationsmatte(n) vom aufgerollten Zustand in den ausgefahrenen Zustand, **dadurch gekennzeichnet, dass** die Entfaltungsmittel wenigstens ein sich in Entrollrichtung erstreckendes, mit der isolationsmatte (8) verbundenes oder in diese integriertes, durch gesteuerte Formänderung vom aufgerollten Zustand in den ausgefahrenen Zustand entrollbares Formänderungselement (7) umfassen, wobei das Formänderungselement (7) derart mit der zugehörigen Isolationsmatte (8) verbunden oder in diese integriert ist, dass das Formänderungselement (7) und die zugehörige Isolationsmatte (8) zusammen vom aufgerollten Zustand in den ausgefahrenen Zustand entrollbar sind.

2. Vorrichtung nach Anspruch 1, **dadurch gekennzeichnet, dass** das Formänderungselement (7) wenigstens einen mit Druckmedium beaufschlagbaren Hohlraum umfasst, sodass der Entrollvorgang frei von mechanischen Bauteilen und rein pneumatisch erfolgt.

3. Vorrichtung nach Anspruch 1 oder 2, **dadurch gekennzeichnet, dass** das Formänderungselement als sich in Entrollrichtung im Wesentlichen über die gesamte Länge der Isolationsmatte (8) erstreckender, aufblasbarer Holm (7) ausgebildet ist, der mit der isolationsmatte (8) verbunden oder in diese integriert ist.

4. Vorrichtung nach Anspruch 1, 2 oder 3, **dadurch gekennzeichnet, dass** das im aufgerollten Zustand radial äußere freie Ende der Isolationsmatte (8) am Raumflugkörper (1), insbesondere an einem Nutzlastadapter (4) des Raumflugkörpers (1), befestigbar ist.

5. Vorrichtung nach einem der Ansprüche 1 bis 4, **dadurch gekennzeichnet, dass** die Isolationsmatte (8) und/oder das Formänderungselement (7) mit einer dem Entrollen entgegenwirkenden Bremsvorrichtung ausgestattet ist bzw. sind.

6. Vorrichtung nach Anspruch 5, **dadurch gekennzeichnet, dass** die Bremsvorrichtung eine lösbare Verbindung, insbesondere eine Haken-Schlauren-Verbindurig (11,12), zwischen übereinander liegenden Lagen der aufgerollten Isoliermatte (8) und/oder des Formänderungselements (7) umfasst.

7. Vorrichtung nach einem der Ansprüche 1 bis 6, **dadurch gekennzeichnet, dass** das Formanderungselement (7) im ausgefahrenen Zustand eine Abwinkelung (15) ausbildet.

8. Vorrichtung nach einem der Ansprüche 1 bis 7, **dadurch gekennzeichnet, dass** benachbarte Isolationsmatten (8) einander überlappen.

## Claims

1. A deployable device for the thermal insulation of cryogenic tanks of spacecraft, including at least one insulating mat, preferably a plurality of insulating mats distributedly arranged in the peripheral direction of the tank, and deployment means each associated to the insulating mat(s) for unrolling the insulating mat(s) from the rolled-up state into the extended state, **characterized in that** the deployment means comprises at least one shape-changing element (7) extending in the unrolling direction, which is connected to, or integrated with, the insulating mat (8) and capable of being unrolled from the rolled-up state into the extended state by a controlled change in shape, wherein the shape-changing element (7) is connected to, or integrated with, the corresponding insulating mat (8), so that the shape-changing element (7) and the corresponding insulating mat (8) are capable of being unrolled together from the rolled-up state into the extended state.

2. A device according to claim 1, **characterized in that** the shape-changing element (7) comprises at least one cavity adapted to be charged with pressure medium such that the unrolling process takes place merely pneumatically, free of any mechanical components.

3. A device according to claim 1 or 2, **characterized in that** the shape-changing element is formed by an inflatable spar (7) extending in the unrolling direction substantially over the entire length of the insulating mat (8) and connected to, or integrated with, the insulating mat (8).

4. A device according to claim 1, 2 or 3, **characterized in that** the radially outer free end of the insulating mat (8), viewed in the rolled-up state, is adapted to be fastened to the spacecraft (1), in particular a payload adapter (4) of the spacecraft (1).

5. A device according to any one of claims 1 to 4, **characterized in that** the insulating mat (8) and/or the shape-changing element (7) is/are equipped with a braking device counteracting the unrolling movement.

6. A device according to claim 5, **characterized in that** the braking device comprises a releasable connection, in particular a hook-and-loop connection (11,12), between superimposed layers of the rolled-up insulating mat (8) and/or shape-changing element (7).

7. A device according to any one of claims 1 to 6, **characterized in that** the shape-changing element (7) forms an angulation (15) in the extended state.

8. A device according to any one of claims 1 to 7, **characterized in that** adjacent insulating mats (8) overlap each other.

## Revendications

1. Dispositif déployable pour l'isolation thermique de réservoirs cryogéniques d'engins spatiaux, comprenant au moins une natte isolante, de préférence une multiplicité de nattes isolantes agencées de manière répartie en direction circonférentielle du réservoir, et des moyens de déploiement respectivement associés à la ou aux nattes isolantes et destinés à dérouler la ou les nattes isolantes de l'état enroulé à l'état déployé, **caractérisé en ce que** les moyens de déploiement comprennent au moins un élément à modification de forme (7) qui s'étend dans la direction de déroulement, qui est relié à la natte isolante (8) ou est intégré dans celle-ci et qui peut être déroulé par modification commandée de forme de l'état enroulé à l'état déployé, dans lequel l'élément à modification de forme (7) est relié de telle manière à la natte isolante (8) associée ou est intégré de telle manière dans celle-ci que l'élément à modification de forme (7) et la natte isolante (8) associée peuvent être déroulés conjointement de l'état enroulé à l'état déployé.

2. Dispositif selon la revendication 1, **caractérisé en ce que** l'élément à modification de forme (7) comprend au moins une cavité pouvant être soumise à un fluide de pression de sorte que l'opération de déroulement s'effectue sans élément mécanique et de façon purement pneumatique.

3. Dispositif selon la revendication 1 ou 2, **caractérisé en ce que** l'élément à modification de forme est conçu comme un longeron gonflable (7) qui s'étend dans la direction de déroulement globalement sur toute la longueur de la natte isolante (8) et qui est relié à la natte isolante (8) ou est intégré dans celle-ci.

4. Dispositif selon la revendication 1, 2 ou 3, **caractérisé en ce que** l'extrémité libre extérieure de façon radiale dans l'état enroulé de la natte isolante (8) peut être fixée à l'engin spatial (1), en particulier au niveau d'un adaptateur de charge utile (4) de l'engin spatial (1).

5. Dispositif selon l'une quelconque des revendications 1 à 4, **caractérisé en ce que** la natte isolante (8) et/ou l'élément à modification de forme (7) est ou sont équipés d'un dispositif de freinage agissant contre le déroulement.

6. Dispositif selon la revendication 5, **caractérisé en ce que** le dispositif de freinage comprend une liaison amovible, en particulier une liaison par crochets et boucles (11, 12), entre des couches superposées de la natte isolante (8) enroulée et/ou de l'élément à modification de forme (7).

7. Dispositif selon l'une quelconque des revendications 1 à 6, **caractérisé en ce que** l'élément à modification de forme (7) forme un pli (15) à l'état déployé.

8. Dispositif selon l'une quelconque des revendications 1 à 7, **caractérisé en ce que** des nattes isolantes (8) voisines se chevauchent.
